# EUROPÄISCHE PATENTSCHRIFT

(11) **EP 3 272 618 B1**
(45) Veröffentlichungstag und Bekanntmachung des Hinweises auf die Patenterteilung: **18.03.2020**
(21) Anmeldenummer: 17180041.0
(22) Anmeldetag: 06.07.2017
(51) Int. Cl.: H04L 29/06, H04W 4/42, B61L 3/12, B61L 15/00, B61L 23/00, B61L 27/00

(54) **VERFAHREN UND VORRICHTUNGEN ZUM DEAKTIVIEREN EINER SICHERHEITSMASSNAHME EINES AUTOMATISCHEN SICHERUNGSSYSTEMS**
METHOD AND APPARATUSES FOR DE-ACTIVATING A SECURITY MEASURE OF AN AUTOMATIC SECURITY SYSTEM
PROCÉDÉ ET APPAREILS DE DÉSACTIVATION D'UNE MESURE DE SÉCURITÉ D'UN SYSTÈME DE SÉCURISATION AUTOMATIQUE

(30) Priorität: 19.07.2016 DE 102016213189
(43) Veröffentlichungstag der Anmeldung: 24.01.2018
(73) Patentinhaber: Thales Management & Services Deutschland GmbH, 71254 Ditzingen (DE)
(72) Erfinder: Schäfer, Dr. Michael, 70806 Kornwestheim (DE)
(74) Vertreter: Kohler Schmid Möbus Patentanwälte

(56) Entgegenhaltungen:
- US-A- 6 067 621
- US-A1- 2010 042 847

## Beschreibung

### Hintergrund der Erfindung

Die Erfindung betrifft ein Verfahren zur Betrieb eines automatischen Sicherungssystems innerhalb eines sicherheitskritischen Zugsicherungssystems, wobei das Sicherungssystem dazu eingerichtet ist, durch eine Sicherheitsmaßnahme in den Betrieb des sicherheitskritischen Zugsicherungssystems einzugreifen, wobei die Sicherheitsmaßnahme durch einen Benutzer deaktivierbar ist. Die Erfindung betrifft auch eine Vorrichtung zum Deaktivieren einer Sicherheitsmaßnahme eines automatischen Sicherungssystems innerhalb eines sicherheitskritischen Zugsicherungssystem, wobei das Sicherungssystem dazu eingerichtet ist, durch eine Sicherheitsmaßnahme in den Betrieb des sicherheitskritischen Zugsicherungssystems einzugreifen.

Ein derartiges Verfahren ist beispielsweise bekannt aus [1] und [2].

Bei bekannten automatischen Sicherungssystemen, wie z. B die punktförmige Zugbeeinflussung PZB, kann oftmals nur eine begrenzte Menge an Informationen zum Triebfahrzeugführer übermittelt werden. So kann es passieren, dass der Triebfahrzeugführer nicht sicher erkennen kann, warum das automatische Zugsicherungssystem in den Prozess eingegriffen hat. Um zu entscheiden, ob die vom Sicherungssystem ergriffene Sicherheitsmaßnahme sinnvoll war, ist es daher vorgeschrieben, dass der Triebfahrzeugführer den Fahrdienstleiter kontaktiert und die näheren Umstände abklärt. Stellt sich heraus, dass die vom Sicherungssystem ergriffene Sicherheitsmaßnahme durch eine technische oder betriebliche Störung verursacht war oder inzwischen hinfällig ist, kann der Triebfahrzeugführer die Sicherheitsmaßnahme umgehen.

Es hat sich jedoch herausgestellt, dass die vorgeschriebene Rücksprache mit dem Fahrdienstleiter nicht immer eingehalten wird, was zu dem in [1] beschriebenen Unfall geführt hat. In [1] wird daher vorgeschlagen, eine zeitlich begrenzte Wiederanfahrsperre nach erfolgter PZB-Sicherheitsmaßnahme vorzusehen, die in erster Linie darauf abzielt, dem Triebfahrzeugführer die nötige Zeit zum Reflektieren der Situation und zum Führen eines Zugfunkgespräches zu geben. Dies würde jedoch zusätzliche Verzögerungen im Zugbetrieb verursachen. Darüber hinaus wird in [1] vorgeschlagen, einen systembedingten, automatischen Verbindungsaufbau zum Fahrdienstleiter nach einer PZB- Sicherheitsmaßnahme vorzusehen, was jedoch nur mit einem hohen technischen Aufwand realisierbar wäre.

Aus [3] ist ein Verfahren zur Authentifizierung eines Benutzers einer Anwendung auf einem Server bekannt, der einen Geheimcode, den der Benutzer auf ein persönliches Gerät übertragen muss, generiert. Zur Autorisierung wird ein Einmalpasswort generiert, das sich aus der aktuellen Uhrzeit und dem Geheimcode berechnet. Bei der Anmeldung muss der Benutzer nun neben dem normalen Passwort auch das generierte Einmalpasswort eingeben. Das zum Erzeugen des Einmalpassworts notwendige Geheimnis wird nicht mehr übertragen und kann deswegen auch nicht abgehört werden. Der Benutzer muss dabei sowohl in Besitz des Passworts als auch in Besitz des persönlichen Geräts sein. Auf diese Weise kann zwar sichergestellt werden, dass nur autorisierte Benutzer Zugriff auf den Server haben, eine unerlaubte Umgehung einer vom automatischen Sicherungssystem veranlassten Sicherheitsmaßnahme kann damit jedoch nicht verhindert werden.

[4] offenbart eine Vorrichtung zur Authentifizierung eines Benutzers einer IC-Karte, mit der Online-Banking durchgeführt werden kann. Die Vorrichtung umfasst eine IC-Karte zur Speicherung eines Geheimschlüssels zur Erzeugung eines Einmal-Passworts und bestimmter Zufallszahlen, ein Terminal zur Erzeugung eines ersten Einmal-Passworts durch einen ersten Passwortgenerator und einen Server zur Authentifizierung des mit dem Terminal erzeugten Einmal-Passwort. Auf dem Server wird durch einen zweiten Passwortgenerator ein weiteres Einmal-Passworts nach dem gleichen Verfahren, wie es im Terminal verwendet wird, generiert. Das erste Einmal-Passworts wird über eine Telefonleitung oder ein Netzwerk an den Server übermittelt. Mittels eines Passwortverifizierers wird verifiziert, ob das erste Passwort mit dem auf dem Server generierten zweiten Passwort identisch ist.

### Aufgabe der Erfindung

Es ist daher Aufgabe der Erfindung ein Verfahren zum Betrieb eines automatischen Sicherungssystems vorzuschlagen, mit dem auf einfache Weise eine unerlaubte Umgehung einer vom automatischen Sicherungssystem veranlassten Sicherheitsmaßnahme verhindert werden kann.

### Beschreibung der Erfindung

Diese Aufgabe wird erfindungsgemäß dadurch gelöst, dass die Sicherheitsmaßnahme nur deaktivierbar ist, wenn sämtliche folgende Verfahrensschritte durchgeführt worden sind:
- Kontaktieren einer vom Benutzer unterschiedlichen autorisierten Person;
- Überprüfung durch die autorisierte Person, ob eine Störung vorliegt, welche die Sicherheitsmaßnahme notwendig macht;
- falls durch die autorisierte Person festgestellt wird, dass keine Störung vorliegt, welche die Sicherheitsmaßnahme notwendig macht: Generierung einer Transaktionsnummer durch die autorisierte Person;
- Übermitteln der Transaktionsnummer zum Benutzer;
- Eingabe der Transaktionsnummer in ein lokales Authentifizierungsgerät, welches Informationen bzgl. des Algorithmus hat, mit dem die Transaktionsnummer erstellt wurde;
- Ermittlung einer Vergleichsnummer durch das Authentifizierungsgerät;
- Vergleich der eingegebenen Transaktionsnummer mit der vom Authentifizierungsgerät ermittelten Vergleichsnummer;
- falls Transaktionsnummer und Vergleichsnummer übereinstimmen: Freigabe der Umgehungsmöglichkeit.

Mit dem erfindungsgemäßen Verfahren wird eine Rückfrage und eine Überprüfung der Situation erzwungen, um das Sicherheitssystem umgehen zu können. Dadurch wird sichergestellt, dass die Situation von der autorisierten Person, die in der Regel Zugang zu mehr Informationen hat als der Benutzer, geprüft und beurteilt werden kann. Sobald die Umgehungsmöglichkeit freigegeben ist, kann die Sicherheitsmaßnahme deaktiviert werden. Das erfindungsgemäße Verfahren erfordert keinen Eingriff in die Geräte des Sicherungssystems. Somit kann auf einfache und kostengünstige Weise die Sicherheit erhöht werden.

Erfindungsgemäß werden zwei voneinander unabhängige Geräte verwendet, nämlich ein Identifikationsgerät zur Generierung der Transaktionsnummer und ein Authentifizierungsgerät zum Generieren der Vergleichsnummer und zum Vergleichen der Vergleichsnummer mit der Transaktionsnummer.

Bei der Kontaktaufnahme authentifiziert sich der Benutzer mit der autorisierten Person bspw. durch Angabe einer Komponentennummer des sicherheitskritischen Systems (Zugnummer o.ä.). Diese Komponentennummer kann dann auch zur Generierung der Transaktionsnummer verwendet werden. Die Generierung der Transaktionsnummer durch die autorisierte Person beinhaltet auch die Generierung durch eine andere Person auf Weisung der autorisierten Person. Die Übermittlung der Transaktionsnummer erfolgt vorzugsweise telefonisch oder per SMS. Das Authentifizierungsgerät befindet sich im Aktionsbereich des Benutzers (lokales Authentifizierungsgerät), ist also vom Benutzer bedienbar. Die Eingabe der Transaktionsnummer erfolgt in der Regel auch durch den Benutzer.

Vorzugsweise wird die Transaktionsnummer mittels eines Identifikationsgeräts generiert wird, für welches der Benutzer nicht autorisiert ist.

Bei einer besonders bevorzugten Variante des erfindungsgemäßen Verfahrens wird die Vergleichsnummer unter Verwendung der Informationen bzgl. des Algorithmus, mit dem die Transaktionsnummer erstellt wurde, vom Authentifizierungsgerät erstellt. Das Identifikationsgerät und das Authentifizierungsgerät verwenden also vorzugsweise den gleichen Algorithmus, um die Identifikationsnummer bzw. die Vergleichsnummer zu generieren.

Vorzugsweise wird die Freigabe der Umgehungsmöglichkeit durch das Authentifizierungsgerät erteilt.

Bei einer speziellen Variante wird die Transaktionsnummer mittels einer Komponentennummer einer mittels des sicherheitskritischen Systems zu steuernden Komponente, insbesondere der Zugnummer eines Zuges, und einem Datumsstempel erzeugt. Möglich ist auch ein minutengenauer Zeitstempel, mit dem die Transaktionsnummer generiert wird. Das Authentifizierungsgerät und das Identifikationsgerät sollten daher mit einer synchronisierten Zeitmesseinrichtung ausgestattet sein (z.B. GNSS, GPS). Das Generieren der Transaktionsnummer kann bspw. mittels eines Hash-Algorithmus erfolgen.

Um die Freigabe der Umgehungsmöglichkeit zeitlich zu begrenzen, kann vorgesehenen sein, dass der Transaktionsnummer ein Zeitfenster zugeordnet wird, innerhalb der die Transaktionsnummer zur Freigabe der Umgehungmöglichkeit genutzt werden kann.

Die Erfindung betrifft auch eine Vorrichtung zum Deaktivieren einer Sicherheitsmaßnahme eines automatischen Sicherungssystems innerhalb eines sicherheitskritischen Zugsicherungssystems, wobei das Sicherungssystem dazu eingerichtet ist, durch eine Sicherheitsmaßnahme in den Betrieb des sicherheitskritischen Zugsicherungssystems einzugreifen, umfassend: ein Identifikationsgerät zum Generieren einer Transaktionsnummer; ein Authentifizierungsgerät zum Vergleichen einer eingegebenen Nummer mit einer Vergleichsnummer, welches Informationen bzgl. des Algorithmus enthält, mit dem die Transaktionsnummer erstellt wurde.

Erfindungsgemäß ist das Authentifizierungsgerät unabhängig vom Identifikationsgerät. D.h. es ist keine Beeinflussung des Authentifizierungsgeräts durch das Identifikationsgerät möglich, insbesondere besteht keine Datenverbindung.

Bei einer besonders bevorzugten Ausführungsform ist das Identifikationsgerät Teil eines zentralen Bediensystems.

Die Erfindung betrifft auch ein sicherheitskritisches Zugsicherungssystems mit einem automatischen Sicherungssystem, einem vom Benutzer bedienbaren Zugang zum Sicherungssystem und einer zuvor beschriebenen Vorrichtung

Vorzugsweise ist das Identifikationsgerät entfernt von der vom Benutzer zu bedienenden Komponente angeordnet. Auf diese Weise wird verhindert, dass der Benutzter selbst die Transaktionsnummer generiert.

Bei einer speziellen Ausführungsform handelt es sich bei dem Zugang um eine Freigabetaste auf dem führenden Triebfahrzeug eines Zuges. Die autorisierte Person kann in diesem Fall bspw. der Fahrdienstleiter sein. Der Benutzer ist vorzugsweise der Triebfahrzeugführer eines Zuges. Das Authentifizierungsgerät ist dann vorzugsweise im Triebfahrzeug des Zugs angeordnet. Mittels der Freigabetaste (Override Button) kann eine vom Sicherungssystem initiierte Maßnahme umgangen werden.

Andere sicherheitskritische Bereiche, in denen das erfindungsgemäße Verfahren vorteilhaft angewendet werden kann, sind Flugverkehr, sicherheitskritische Infrastruktur, wie Kraftwerke, Energie- und Wasserversorgung, sicherheitskritische Systeme in der Automatisierungs- und Prozessleittechnik, Leitsysteme im Straßenverkehr.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine erfindungsgemäße Vorrichtung zur Verwendung in einem sicherheitskritischen System mit einem automatischen Sicherungssystem.
- Fig. 2: zeigt ein Verlaufsschema mit den Verfahrensschritten des erfindungsgemäßen Verfahrens.

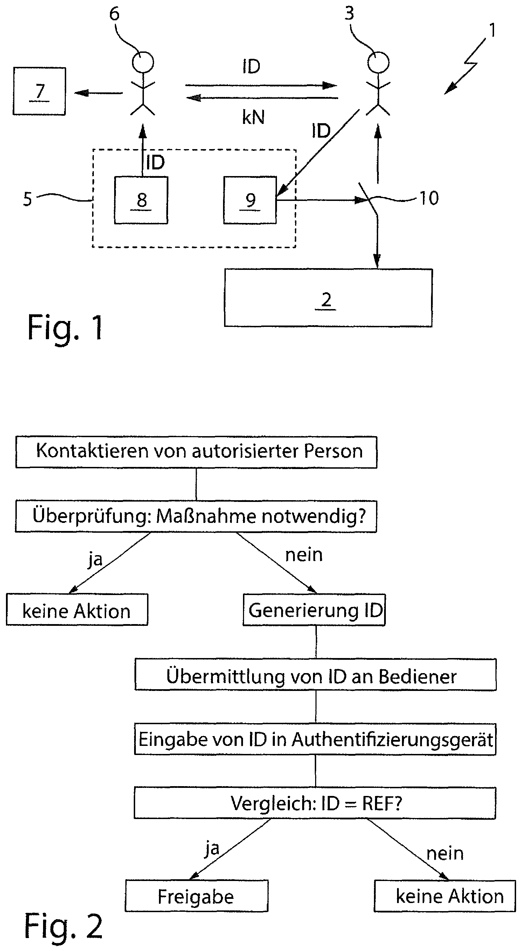

**Fig. 1** zeigt ein sicherheitskritisches System **1** mit einem automatischen Sicherungssystem **2.** Das automatische Sicherungssystem 2 greift automatisch in den Betrieb des sicherheitskritischen Systems 1 ein, indem Sicherheitsmaßnahmen bezüglich einer von einem Bediener 3 zu bedienende Komponenten (z.B. ein Triebfahrzeug) initiiert werden. Ist ein Benutzer **3** der Meinung, dass eine initiierte Sicherheitsmaßnahme, die ihn bzw. eine von ihm zu bedienende Komponente betrifft, unnötig ist oder fälschlicherweise ausgelöst wurde, besteht die Möglichkeit, die Sicherheitsmaßnahme zu umgehen. Dazu umfasst das erfindungsgemäße Sicherungssystem 1 eine Vorrichtung **5** zum Deaktivieren der Sicherheitsmaßnahme. Das entsprechende Verfahren ist in **Fig. 2** schematisch dargestellt. Der Benutzer 3 kontaktiert dazu zunächst eine autorisierte Person **6** (z.B. den Fahrdienstleiter) und weist sich bspw. mit einer für die von ihm zu bedienenden Komponente charakteristischen Komponentennummer **KN** (z.B. Zugnummer des von der Sicherheitsmaßnahme betroffenen Zuges) als zuständiger Bediener aus. Die autorisierte Person 6 prüft anhand der ihr zur Verfügung stehenden Information **7,** ob die Sicherheitsmaßnahme notwendig ist oder nicht. Kommt die autorisierte Person 6 zu dem Schluss, dass die Sicherheitsmaßnahme unnötig war, generiert sie mit Hilfe eines Identifikationsgeräts **8** eine Transaktionsnummer **ID,** z. B. aus der vom Benutzer übermittelten Komponentennummer KN und der aktuellen Uhrzeit. Die generierte Transaktionsnummer ID wird dem Benutzer 3 übermittelt. Innerhalb des räumlichen Aktionsbereichs des Benutzers 3 ist ein Authentifizierungsgerät **9** angeordnet (z.B. ein Tablet oder ein PC; im Falle eines Zuges kann das Authentifizierungsgerät 9 bspw. in einer On-Board-Unit integriert sein). Das Authentifizierungsgerät 9 generiert (vorzugsweise auf Anfrage bzw. nach Eingabe der Transaktionsnummer) eine Vergleichsnummer **REF** unter Verwendung desselben Algorithmus oder eines ähnlichen Algorithmus wie der Algorithmus, mit dem die Identifikationsnummer ID generiert wurde. Ein ähnlicher Algorithmus wäre z.B., dass eine gewisse zeitliche Abweichung erlaubt wird, in dem die Vergleichsnummern REF für +/-5 Minuten generiert werden und mit der ID übereinstimmen muss. Darüber hinaus vergleicht das Authentifizierungsgerät 9 die Identifikationsnummer ID mit der Vergleichsnummer REF. Ergibt der Vergleich, dass die Identifikationsnummer ID mit der Vergleichsnummer REF übereinstimmt, wird eine Umgehungsmöglichkeit der initiierten Sicherheitsmaßnahme freigegeben. Das erfindungsgemäße sicherheitskritische System umfasst also einen aktivierbaren Zugang **10** zum Sicherungssystem 2 (hier als Schalter dargestellt). Das Authentifikationsgerät 9 hat Zugriff auf diesen Zugang zum Sicherungssystem 2 und kann eine Aktivierung einer Umgehungsmöglichkeit erlauben (durch Aktivieren des Zugangs 10) oder verhindern. Das Aktivieren erfolgt also durch die Vorrichtung 5. Der Schalter 10 ist vorzugsweise Teil des Sicherungssystems 2. Typischerweise wird durch die Vorrichtung 5 zur Aktivierung eine Spannung an den Schalter 10 angelegt oder es wird eine Klappe geöffnet, um den Zugriff zum Sicherungssystem 2 zu ermöglichen. Das Authentifikationsgerät 9 greift nicht in die Geräte des Sicherungssystems 2 ein, sondern ermöglicht lediglich den Zugriff des Benutzers 3 auf die Geräte des Sicherungssystems 2.

Die Situation, die zur Sicherheitsmaßnahme geführt hat, wird erfindungsgemäß also zwangsweise von zwei verschiedenen Personen 3, 6 beurteilt (4-Augen-Prinzip). Eine Freigabe der Umgehung der Sicherheitsmaßnahme kann nur mit Erlaubnis der autorisierten Person 6 erfolgen, so dass ohne Veränderung des Sicherungssystems 2 sichergestellt ist, dass eine Rücksprache mit der autorisierten Person 6 erfolgt. So werden bspw. keine neuen Schnittstellen benötigt. Dadurch können auf kostengünstige Weise die Sicherheit erhöht und Verzögerungen im Betrieb des sicherheitskritischen Systems 1 klein gehalten werden.

### Bezugszeichenliste

- 1: sicherheitskritisches System
- 2: automatisches Sicherungssystem
- 3: Benutzer
- 5: Vorrichtung zum Deaktivieren der Sicherheitsmaßnahme
- 6: autorisierte Person
- 7: Information
- 8: Identifikationsgerät
- 9: Authentifizierungsgerät
- 10: aktivierbarer Zugang zum Sicherungssystem
- ID: Transaktionsnummer
- REF: Vergleichsnummer

### Literaturliste

[1] http://www.eisenbahn-unfalluntersuchung.de/SharedDocs/ Publikationen/EUB/DE/Untersuchungsberichte/2014/065 Mannheim Hbf.pdf? blob=publicationFile&v=3 Untersuchungszentrale der Eisenbahn-Unfalluntersuchungsstelle des Bundes: "Untersuchungsbericht Aktenzeichen: 60uu2014-08/002-3323" 23.09.2015
[2] https://en.wikipedia.org/wiki/Punktf%C3%B6rmige Zugbeeinflussung
[3] https://play.google.com/store/apps/details?id=com.google.android. apps.authenticator2&hl=de
[4] US 6 067 621 A

## Patentansprüche

1. Verfahren zum Betrieb eines automatischen Sicherungssystems (2) innerhalb eines sicherheitskritischen Zugsicherungssystems (1), wobei das Sicherungssystem (2) dazu eingerichtet ist, durch eine Sicherheitsmaßnahme in den Betrieb des sicherheitskritischen Zugsicherungssystems (1) einzugreifen, wobei die Sicherheitsmaßnahme durch einen Benutzer (3) deaktivierbar ist,
**dadurch gekennzeichnet,**
**dass** die Sicherheitsmaßnahme nur deaktivierbar ist, wenn sämtliche folgende Verfahrensschritte durchgeführt worden sind:
• Kontaktieren einer vom Benutzer (3) unterschiedlichen autorisierten Person (6);
• Überprüfung durch die autorisierte Person (6), ob eine Störung vorliegt, welche die Sicherheitsmaßnahme notwendig macht;
• falls durch die autorisierte Person (6) festgestellt wird, dass keine Störung vorliegt, welche die Sicherheitsmaßnahme notwendig macht: Generierung einer Transaktionsnummer (ID) mittels eines Identifikationsgeräts durch die autorisierte Person (6);
• Übermitteln der Transaktionsnummer (ID) zum Benutzer;
• Eingabe der Transaktionsnummer (ID) in ein lokales Authentifizierungsgerät (9), welches Informationen bzgl. des Algorithmus hat, mit dem die Transaktionsnummer (ID) erstellt wurde, wobei das Authentifizierungsgerät und das Identifikationsgerät voneinander unabhängig sind, so dass keine Datenverbindung zwischen Authentifizierungsgerät und das Identifikationsgerät besteht;
• Ermittlung einer Vergleichsnummer (REF) durch das Authentifizierungsgerät (9);
• Vergleich der eingegebenen Transaktionsnummer (ID) mit der vom Authentifizierungsgerät (9) ermittelten Vergleichsnummer (REF) durch das Authentifizierungsgerät;
• Falls Transaktionsnummer (ID) und Vergleichsnummer (REF) übereinstimmen: Freigabe der Umgehungsmöglichkeit.

2. Verfahren nach Anspruch 1, **dadurch gekennzeichnet, dass** die Transaktionsnummer (ID) mittels eines Identifikationsgeräts (8) generiert wird, für welches der Benutzer (3) nicht autorisiert ist.

3. Verfahren nach einem der vorhergehenden Ansprüche, **dadurch gekennzeichnet, dass** die Vergleichsnummer (REF) unter Verwendung der Informationen bzgl. des Algorithmus, mit dem die Transaktionsnummer (ID) erstellt wurde, vom Authentifizierungsgerät (9) erstellt wird.

4. Verfahren nach einem der vorhergehenden Ansprüche, **dadurch gekennzeichnet, dass** die Freigabe der Umgehungsmöglichkeit durch das Authentifizierungsgerät (9) erteilt wird.

5. Verfahren nach einem der vorhergehenden Ansprüche, **dadurch gekennzeichnet, dass** die Transaktionsnummer (ID) mittels einer Komponentennummer (KN) einer Komponente des sicherheitskritischen Zugsicherungssystems (1), insbesondere der Zugnummer eines Zuges, und einem Datumsstempel erzeugt wird.

6. Verfahren nach einem der vorhergehenden Ansprüche, **dadurch gekennzeichnet, dass** der Transaktionsnummer (ID) ein Zeitfenster zugeordnet wird, innerhalb der die Transaktionsnummer (ID) zur Freigabe der Umgehungmöglichkeit genutzt werden kann.

7. Vorrichtung (5) zum Deaktivieren einer Sicherheitsmaßnahme eines automatischen Sicherungssystems (2) innerhalb eines sicherheitskritischen Zugsicherungssystems (1), wobei das Sicherungssystem (2) dazu eingerichtet ist, durch eine Sicherheitsmaßnahme in den Betrieb des sicherheitskritischen Zugsicherungssystems (1) einzugreifen, umfassend:
ein Identifikationsgerät (8) zum Generieren einer Transaktionsnummer (ID);
Mittel zum Übermitteln der Transaktionsnummer (ID) zu einem Benutzer;
ein Authentifizierungsgerät (9) zum Ermitteln einer Vergleichsnummer (REF) und zum Vergleichen der eingegebenen Transaktionsnummer (ID) mit der Vergleichsnummer (REF), wobei das Authentifizierungsgerät (9) Informationen bzgl. des Algorithmus enthält, mit dem die Transaktionsnummer (ID) erstellt wurde,
Mittel zur Eingabe der Transaktionsnummer (ID) in das Authentifizierungsgerät (9),
wobei das Authentifizierungsgerät und das Identifikationsgerät unabhängig voneinander sind, so dass keine Datenverbindung zwischen Authentifizierungsgerät und das Identifikationsgerät besteht.

8. Vorrichtung (5) nach Anspruch 7, **dadurch gekennzeichnet, dass** das Authentifizierungsgerät (9) unabhängig vom Identifikationsgerät (8) ist.

9. Vorrichtung (5) nach einem der Ansprüche 7 oder 8, **dadurch gekennzeichnet, dass** das Identifikationsgerät (8) Teil eines zentralen Bediensystems ist.

10. Sicherheitskritisches Zugsicherungssystem (1) mit einem automatischen Sicherungssystem (2), einem vom Benutzer bedienbaren Zugang (10) zum Sicherungssystem und einer Vorrichtung (5) nach einem der Ansprüche 7 bis 9.

11. Sicherheitskritisches Zugsicherungssystem (1) nach Anspruch 10, **dadurch gekennzeichnet, dass** das Identifikationsgerät (8) entfernt von der vom Benutzer (3) zu bedienenden Komponente angeordnet ist.

12. Sicherheitskritisches Zugsicherungssystem nach Anspruch 10 oder 11, **dadurch gekennzeichnet, dass** es sich bei der Komponente um die Freigabetaste auf dem führenden Triebfahrzeug eines Zuges handelt.

## Claims

1. Method of operating an automatic control system (2) within a safety-critical train control system (1), wherein the control system (2) is configured to interfere with the operation of a safety-critical train control system (1) using a safety measure, wherein the safety measure can be deactivated by a user (3), **characterized in that**
the safety measure can only be deactivated if each of the following method steps has been performed:
- contacting an authorized person (6) other than the user (3);
- checking by the authorized person (6) whether there is a problem that requires the safety measure;
- if the authorized person (6) determines that there is no problem that requires the safety measure: generating a transaction number (ID) by means of an identification device by the authorized person (6);
- transmitting the transaction number (ID) to the user;
- entering the transaction number (ID) into a local authentication device (9) having information concerning the algorithm used to generate the transaction number (ID), wherein the authentication device and the identification device are independent of each other such that there is no data connection between the authentication device and the identification device;
- determination of a reference number (REF) by the authentication device (9);
- comparing by the authentication device the entered transaction number (ID) with the reference number (REF) determined by the authentication device (9);
- If transaction number (ID) and reference number (REF) coincide: approval of the circumventive option.

2. Method according to claim 1, **characterized in that** the transaction number (ID) is generated by means of an identification device (8) for which the user (3) is not authorized.

3. Method according to any one of the preceding claims, **characterized in that** the reference number (REF) is generated by the authentication device (9) using the information concerning the algorithm used to generate the transaction number (ID).

4. Method according to any one of the preceding claims, **characterized in that** the approval of the circumventive option is given by the authentication device (9).

5. Method according to any one of the preceding claims, **characterized in that** the transaction number (ID) is generated by means of a component number (KN) of a component of the safety-critical train control system (1), in particular the train number of a train, and a date stamp.

6. Method according to any one of the preceding claims, **characterized in that** the transaction number (ID) is associated with a time window within which the transaction number (ID) can be used to approve the circumventive option.

7. Device (5) for deactivating a safety measure of an automatic control system (2) within a safety-critical train control system (1), wherein the control system (2) is configured to interfere with the operation of the safety-critical train control system (1) using a safety measure, comprising:
an identification device (8) for generating a transaction number (ID);
means for transmitting the transaction number (ID) to a user;
an authentication device (9) for determining a reference number (REF) and for comparing the entered transaction number (ID) with the reference number (REF), wherein the authentication device (9) contains information concerning the algorithm used to generate the transaction number (ID),
means for entering the transaction number (ID) into the authentication device (9),
wherein the authentication device and the identification device are independent of each other such that there is no data connection between the authentication device and the identification device.

8. Device (5) according to claim 7, **characterized in that** the authentication device (9) is independent of the identification device (8).

9. Device (5) according to any one of the claims 7 or 8, **characterized in that** the identification device (8) is part of a central control system.

10. Safety-critical train control system (1) comprising an automatic control system (2), an access (10) to the control system that can be used by the user, and a device (5) according to any one of the claims 7 to 9.

11. Safety-critical train control system (1) according to claim 10, **characterized in that** the identification device (8) is located at a distance from the component to be used by the user (3).

12. Safety-critical train control system according to claim 10 or 11, **characterized in that** the component is the release button on the leading locomotive of a train.

## Revendications

1. Procédé pour faire fonctionner un système de sécurité automatique (2) à l'intérieur d'un système de sécurité de train (1) critique pour la sécurité, le système de sécurité (2) étant conçu pour intervenir par une mesure de sécurité dans le fonctionnement du système de sécurité de train (1) critique pour la sécurité, la mesure de sécurité pouvant être désactivée par un utilisateur (3),
**caractérisé en ce**
**que** la mesure de sécurité ne peut être désactivée que lorsque toutes les étapes de procédé suivantes ont été exécutées :
* prise de contact avec une personne autorisée (6) différente de l'utilisateur (3) ;
* vérification par la personne autorisée (6) s'il y a présence d'un dérangement qui rend nécessaire la mesure de sécurité ;
* s'il est constaté par la personne autorisée (6) qu'aucun dérangement qui rend nécessaire la mesure de sécurité n'est présent : génération d'un numéro de transaction (ID) au moyen d'un appareil d'identification par la personne autorisée (6) ;
* communication du numéro de transaction (ID) à l'utilisateur ;
* saisie du numéro de transaction (ID) dans un appareil d'authentification (9) local qui possède des informations à propos de l'algorithme avec lequel le numéro de transaction (ID) a été créé, l'appareil d'authentification et l'appareil d'identification étant indépendants l'un de l'autre, de sorte qu'aucune liaison de données n'existe entre l'appareil d'authentification et l'appareil d'identification ;
* détermination d'un numéro de référence (REF) par l'appareil d'authentification (9) ;
* comparaison par l'appareil d'authentification du numéro de transaction (ID) saisi avec le numéro de référence (REF) déterminé par l'appareil d'authentification (9) ;
* dans le cas où le numéro de transaction (ID) et le numéro de référence (REF) coïncident : libération de la possibilité de contournement.

2. Procédé selon la revendication 1, **caractérisé en ce que** le numéro de transaction (ID) est généré au moyen d'un appareil d'identification (8) pour lequel l'utilisateur (3) n'est pas autorisé.

3. Procédé selon l'une des revendications précédentes, **caractérisé en ce que** le numéro de référence (REF) est créé par l'appareil d'authentification (9) en utilisant les informations concernant l'algorithme avec lequel a été créé le numéro de transaction (ID).

4. Procédé selon l'une des revendications précédentes, **caractérisé en ce que** la libération de la possibilité de contournement est octroyée par l'appareil d'authentification (9).

5. Procédé selon l'une des revendications précédentes, **caractérisé en ce que** le numéro de transaction (ID) est généré au moyen d'un numéro de composant (KN) d'un composant du système de sécurité de train (1) critique pour la sécurité, notamment le numéro de train d'un train, et d'une estampille temporelle.

6. Procédé selon l'une des revendications précédentes, **caractérisé en ce qu'**au numéro de transaction (ID) est associé un créneau temporel à l'intérieur duquel le numéro de transaction (ID) peut être utilisé pour la libération de la possibilité de contournement.

7. Dispositif (5) de désactivation d'une mesure de sécurité d'un système de sécurité automatique (2) à l'intérieur d'un système de sécurité de train (1) critique pour la sécurité, le système de sécurité (2) étant conçu pour intervenir par une mesure de sécurité dans le fonctionnement du système de sécurité de train (1) critique pour la sécurité, comprenant :
un appareil d'identification (8) destiné à générer un numéro de transaction (ID) ;
des moyens de communication du numéro de transaction (ID) à un utilisateur ;
un appareil d'authentification (9) destiné à déterminer un numéro de référence (REF) et à comparer le numéro de transaction (ID) saisi avec le numéro de référence (REF), l'appareil d'authentification (9) contenant des informations concernant l'algorithme avec lequel le numéro de transaction (ID) a été créé,
des moyens pour saisir le numéro de transaction (ID) dans l'appareil d'authentification (9),
l'appareil d'authentification et l'appareil d'identification étant indépendants l'un de l'autre, de sorte qu'aucune liaison de données n'existe entre l'appareil d'authentification et l'appareil d'identification.

8. Dispositif (5) selon la revendication 7, **caractérisé en ce que** l'appareil d'authentification (9) est indépendant de l'appareil d'identification (8).

9. Dispositif (5) selon l'une des revendications 7 et 8, **caractérisé en ce que** l'appareil d'identification (8) fait partie d'un système de commande central.

10. Système de sécurité de train (1) critique pour la sécurité comprenant un système de sécurité automatique (2), un accès (10) au système de sécurité pouvant être actionné par l'utilisateur et un dispositif (5) selon l'une des revendications 7 à 9.

11. Système de sécurité de train (1) critique pour la sécurité selon la revendication 10, **caractérisé en ce que** l'appareil d'identification (8) est disposé à distance du composant à actionner par l'utilisateur (3).

12. Système de sécurité de train critique pour la sécurité selon la revendication 10 ou 11, **caractérisé en ce que** le composant est la touche de libération sur la motrice de tête d'un train.
